# EUROPEAN PATENT APPLICATION

(11) **EP 2 728 171 A2**
(43) Date of publication of application: **07.05.2014**
(21) Application number: 13190534.1
(22) Date of filing: 28.10.2013
(51) Int. Cl.: F03D 1/06

(54) **A wind turbine rotor blade assembly with a ring insert in the blade root**

(30) Priority: 31.10.2012 US 201213664587
(71) Applicant: General Electric Company, Schenectady, New York 12345 (US)
(72) Inventor: Bussieres, Frederic, 48499 Salzbergen (DE); Goldberg, Mats, 16570 SE Stockholm (SE)
(74) Representative: Bedford, Grant Richard

(57) **Abstract**

A rotor blade assembly 22 for a wind turbine 10 includes a ring insert 100 in the blade root section 104. The blade root section 104 has a span-wise end portion defined by an inner circumferential component 122 and an outer circumferential component 124, with a radial gap 136 between the components. The ring insert 100 is disposed in the radial gap 136 and is bonded to the inner and outer circumferential components 122,124. The ring insert 100 has an inner circumferential surface 126 and an outer circumferential surface 128, wherein at least one of the inner or outer circumferential surfaces 126,128 has a radially varying cross-sectional profile that increases bonding surface contact area between the inner or outer circumferential surface 126,128 and the respective circumferential component 122,124 of the blade root section 104 as compared to a constant radius cross-sectional profile.

## Description

The present subject matter relates generally to wind turbines and, more particularly, to a root configuration of a wind turbine rotor blade assembly.

Wind power is considered one of the cleanest, most environmentally friendly energy sources presently available, and wind turbines have gained increased attention in this regard. A modem wind turbine typically includes a tower, generator, gearbox, nacelle, and a rotor. The rotor is coupled to the nacelle and includes a rotatable hub having one or more rotor blades. The rotor blades are connected to the hub by a blade root. The rotor blades capture kinetic energy from wind using known airfoil principles and convert the kinetic energy into mechanical energy through rotational energy to turn a shaft coupling the rotor blades to a gearbox, or if a gearbox is not used, directly to the generator. The generator then converts the mechanical energy to electrical energy that may be deployed to a utility grid.

The particular size of the rotor blades is a significant factor contributing to the overall capacity of the wind turbine. Specifically, increases in the length or span of a rotor blade may generally lead to an overall increase in the energy production of a wind turbine. Accordingly, efforts to increase the size of rotor blades aid in the continuing growth of wind turbine technology and the adoption of wind energy as an alternative and commercially competitive energy source. Such increases in rotor blade size, however, may impose increased loads on various wind turbine components. For example, larger rotor blades may experience increased stresses at the connection between the blade root and the hub, leading to challenging design constraints, both characterized by extreme events and fatigue life requirements.

The likelihood of structural failure due to fatigue at the rotor blade joint is typically increased by the presence of high stress concentration between the load bearing components, manufacturing defects, unexpected loading events or deterioration of the joint. Loss of preload can also occur in the bolted joint which is known to reduce fatigue life. To endure the load envelope specific to the rotor blade root, various methods and systems have been devised and implemented to improve the connection between the dissimilar materials intrinsic to the rotor components. For example, some systems consist of a blade root having a flange, wherein the flange is bolted to the hub. In other systems, steel inserts or rods are bolted directly into the composite blade root. In still additional systems, low-cost, low-density foam is inserted between the bolts and inserts.

Not all such configurations, however, maximize load transfer between the composite and the metal materials, which may cause a variety of design problems such as high concentration factors, structural discontinuity, and ovalization issues due to the Brazier effect. The Brazier effect occurs when the blade root is subjected to bending and the longitudinal tension and compression which resists the applied load tends to flatten or ovalize the cross-section, inherently reducing sectional moment of inertia, further reducing load bearing capability.

Thus, there is a need for an improved system for attaching a blade root to a hub that provides enhanced bonding between dissimilar materials, thereby eliminating the aforementioned problems and enabling further scaling of the wind turbine rotor blades.

Various aspects and advantages of the invention will be set forth in part in the following description, or may be clear from the description, or may be learned through practice of the invention.

In accordance with one embodiment of the invention, a rotor blade assembly for a wind turbine having a ring insert in the blade root section is disclosed. The rotor blade component includes a pressure side and a suction side bounded by a leading edge and a trailing edge. The generally cylindrical blade root section extends span-wise from the blade end face to several meters outboard. The blade root cross section is defined by an inner circumferential component and an outer circumferential component (both of which may be a laminate having a diameter, thickness, and length). The inner and outer circumferential components are separated by a radial gap. The ring insert is disposed in this radial gap portion of the root and is bonded to the inner and outer circumferential components. Furthermore, the ring insert has an inner circumferential surface and an outer circumferential surface, wherein at least one of the inner or outer circumferential surfaces has a span-wise or circumferentially (which may include a combination of both) varying cross-sectional profile intended to increase the bonding surface area and reduce laminate material usage. The varying cross-sectional profile increases the bonding surface area as compared to a constant or non-varying cross-sectional profile.

In another embodiment, the inner and outer circumferential surfaces both have a span-wise or circumferentially varying cross-sectional profile so as to increase bonding surface contact area between the inner or outer circumferential surfaces and the respective circumferential components of the blade root section as compared to a constant thickness cross-section. On the respective surfaces, the circumferentially varying cross-sectional profile may be composed of a variety of undulating corrugated patterns. For example, such patterns may include, but are not limited to squares, rectangles, triangles, waves, semi-circles, or similar shapes so as to provide mechanical locking of the material by promoting shear along with bonding strength, as a load transfer mechanism. Further, the undulating corrugated pattern of the inner surface may be the same as the undulating corrugated pattern of the outer surface, or the patterns may be different. In addition to the corrugations, the surface may be textured, etched, or finished so as to maximize adhesion of the root circumferential components to the ring insert.

In a particular embodiment, the end face of the root section is generally flush with an end face of the ring insert. In a different embodiment, the ring insert may extend beyond the end of the root circumferential components, in which case only the ring insert is in direct contact with the pitch bearing.

In certain embodiments, the inner and outer circumferential components of the root section merge together at an apex (opposite from the end face) and the ring insert is further bonded at the apex. A transition material may be present at this apex for stress/strain concentration mitigation.

Additionally, a connecting means may extend through the pitch bearing and the rotor blade assembly. Moreover, the connecting means may be disposed within the ring insert. The connecting means may be, for example, circumferentially spaced bolts or other suitable mechanical devices that engage within the ring insert and connect the pitch bearing to the rotor blade assembly.

In another embodiment, a wind turbine having a tower; a nacelle configured atop the tower; and a rotor having a rotatable hub and at least one rotor blade assembly is disclosed. The at least one rotor blade assembly may be configured in accordance with any of the embodiments discussed above.

Various features, aspects and advantages of the present invention will be further supported and described with reference to the following description and appended claims. The accompanying drawings, which are incorporated in and constitute a part of this specification, illustrate embodiments of the invention and, together with the description, serve to explain the principles of the invention. In the drawings:
FIG. 1 illustrates a perspective view of one embodiment of a wind turbine according to the present disclosure;
FIG. 2 illustrates a perspective view of one embodiment of a rotor blade assembly of a wind turbine according to the present disclosure;
FIG. 3 illustrates an enlarged view of a portion of the rotor blade assembly of FIG. 2 according to the present invention;
FIG. 4 illustrates a cross-sectional view of a portion of one embodiment of the rotor blade assembly according to the present disclosure;
FIG. 5 illustrates a top view along line A-A of the embodiment of FIG. 4 according to the present invention; and
FIG. 6 illustrates a perspective view of one embodiment of a portion of the rotor blade assembly according to the present invention.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Various aspects of the present invention disclose a wind turbine and a rotor blade assembly for a wind turbine having a ring insert in the blade root section. The ring insert provides enhanced load bearing capability through bonding between dissimilar structural materials and is configured to improve load transfer capability in the blade root section, thereby strengthening and improving rotor blade life.

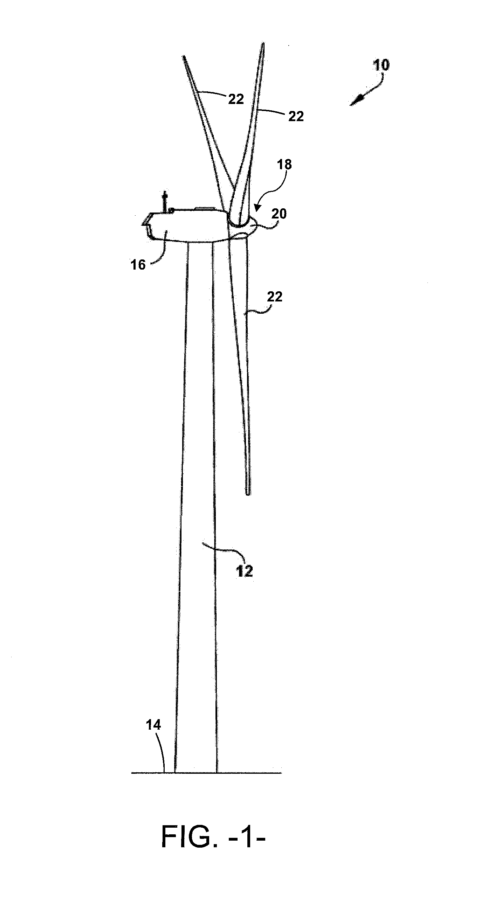

Referring to the drawings, FIG. 1 illustrates a perspective view of one embodiment of a wind turbine 10. As shown, the wind turbine 10 includes a tower 12 extending from a support surface 14, a nacelle 16 mounted on the tower 12, and a rotor 18 coupled to the nacelle 16. The rotor 18 includes a rotatable hub 20 and at least one rotor blade assembly 22 coupled to and extending outwardly from the hub 20. For example, in the illustrated embodiment, the rotor 18 includes three rotor blade assemblies 22. However, in an alternative embodiment, the rotor 18 may include more or less than three rotor blade assemblies 22. Each rotor blade assembly 22 may be spaced about the hub 20 to facilitate rotating the rotor 18 to enable kinetic energy to be transferred from the wind into usable mechanical energy, and subsequently, electrical energy. For instance, the hub 20 may be rotatably coupled to the nacelle 16, which encloses an electric generator (not shown) to permit electrical energy to be produced.

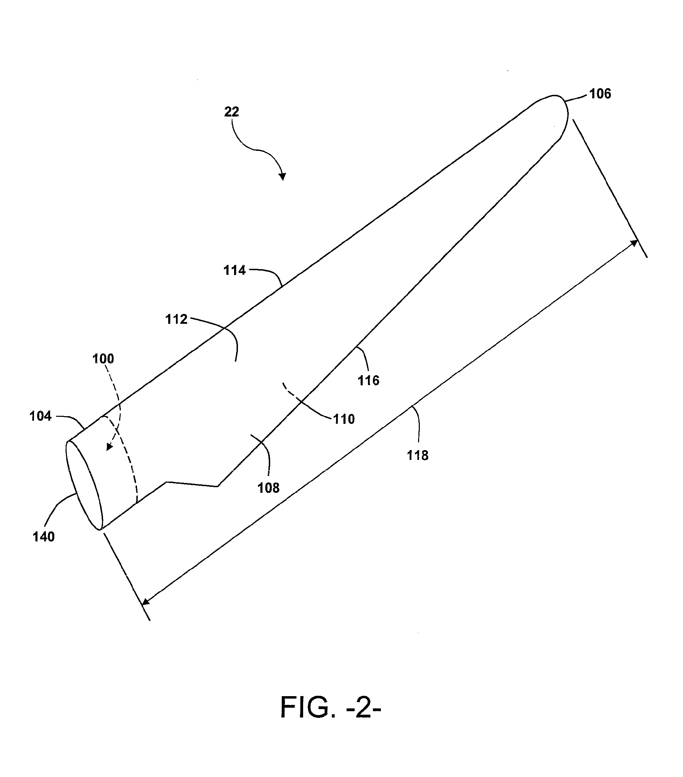

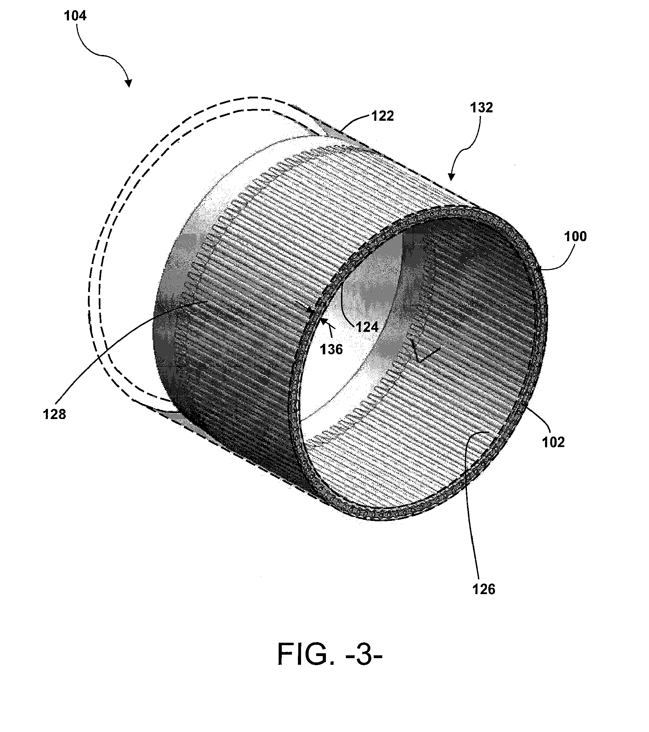

Referring now to FIG. 2, there is illustrated one embodiment of a rotor blade assembly 22 with a ring insert 100 in a blade root section 104 in accordance with the present invention. More specifically, the rotor blade assembly 22 includes a shell 108 defining a pressure side 110 and a suction side 112 between a leading edge 114 and a trailing edge 116. The shell 108 may generally be configured to extend between the blade root section 104 and a blade tip 106 disposed opposite the blade root section 104 and may serve as the outer casing/covering of inner load bearing structure of the blade. Further, the rotor blade assembly 22 may have a span 118 defining the total length between the blade root section 104 and the blade tip 106. The blade root section 104 may have a generally cylindrical shape and may extend span-wise from the pressure side 110 and suction side 112 to an end face 140 of the root section 104. Further, the blade root section 104 may be configured to attach the rotor blade assembly 22 to the hub 18 of the wind turbine 10 (FIG. 1). A ring insert 100 (as indicated by the dotted lines) is disposed within the blade root section 104, and will be discussed in greater detail in regards to FIGS. 3-6.

Referring now to FIG. 3, an enlarged view of the blade root section 104 of the rotor blade assembly 22 of FIG. 2 is illustrated. In this particular embodiment, the blade root section 104 has a span-wise extension portion 132 defined by an inner circumferential component 124 and outer circumferential component 122. The term "circumferential component" is used herein to encompass any material configuration that defines the separate three-dimensional structures of the components 122, 124, such as separate laminates. It should also be understood that the term "circumferential" is not limited to "cylindrical", but includes the presence of any type of structure that may affect the cross-sectional shape of the root circumferential components, such as surface corrugations or other surface characteristics. The inner 124 and outer 122 circumferential components are separated by the radial gap 136. A ring insert 100 is disposed in the radial gap 136 and bonded to the inner 124 and outer 122 circumferential components of the blade root section 104. The ring insert 100 has an inner circumferential surface 126 and an outer circumferential surface 128, wherein at least one of the inner 126 or outer 128 circumferential surfaces has a radially and/or span-wise varying cross-sectional profile that increases bonding surface contact area between the surfaces 126, 128 and the respective circumferential components 124, 122 as compared to a non-varying cross-sectional profile. As illustrated in the embodiment of FIG. 3, both surfaces 126, 128 have a radially varying cross-sectional profile. In additional embodiments, either one or both of the surfaces 126, 128 may have a radially and/or span-wise varying cross-sectional profile.

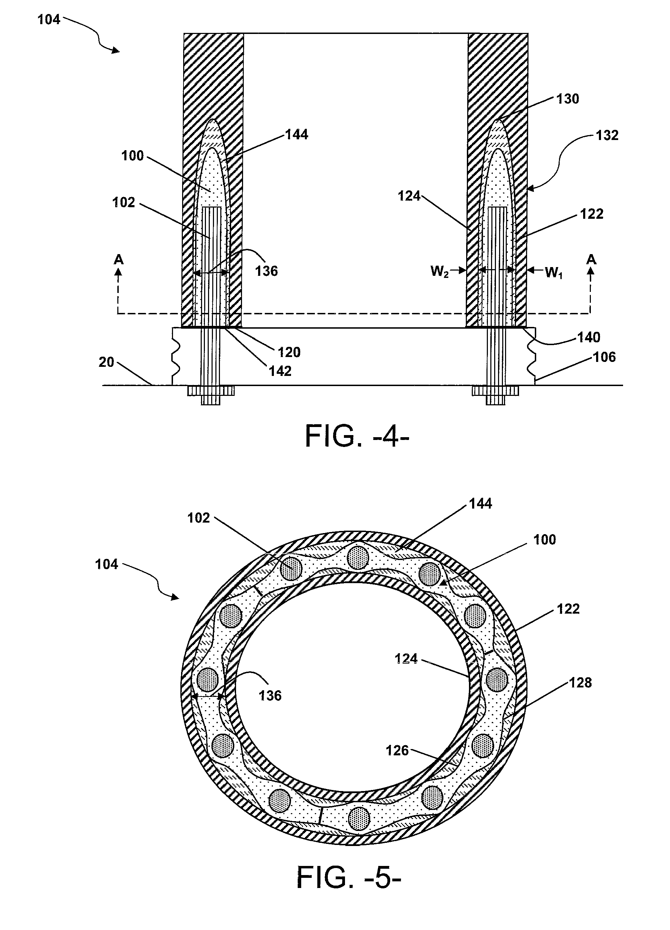

Such surfaces may contain a variety of undulating or corrugated patterns. For example, the undulating pattern may be prismatic (squares, triangles, etc.), waves, semi-circles, or other suitable varying structure. Further, the inner circumferential surface 126 may contain one undulating pattern, while the outer circumferential surface 128 may have a different undulating pattern. In still additional embodiments, both the inner and outer circumferential surfaces 126, 128 may have the same undulating pattern. As illustrated in FIG. 3 (and shown in greater detail in FIG. 5), both the inner and outer circumferential surfaces 126, 128 have a wave-like undulating pattern, so as to coordinate with connecting means 102

Still referring to FIG. 3, a connecting means 102 extends into the ring insert 100. The connecting means 102 may be a bolt or any suitable connecting device that secures the blade root section 104 to a pitch bearing 106 (not shown) and/or other wind turbine components. For example, the connecting means 102 may be screwed into the ring insert 100 as per conventional means, where preload is intended to compress the ring insert 100 against the pitch bearing.

Referring now to FIGS. 4 and 5, a cross-sectional view and a top view of blade root section 104 and ring insert 100 according to certain embodiments are illustrated, respectively. As shown in FIG. 4, the blade root section 104 is connected to a hub 20 with a plurality of bolts 102 through pitch bearing 106. The blade root section 104 has a span-wise end extension 132 defined by an inner circumferential component 124 and an outer circumferential component 122. The inner 124 and outer 122 circumferential components are separated by a radial gap 136. Further, the inner 124 and outer 122 circumferential components merge together at apex 130, thereby providing a single, solid structure.

The outer circumferential component 122 defines a first wall thickness, W₁, and the inner circumferential component 124 defines a second wall thickness, W₂. The first wall thickness may be greater than, less than, or equal to the second wall thickness. For example, as illustrated, the first wall thickness and the second wall thickness are substantially equal.

Still referring to FIG. 4, the ring insert 100 (made of one section or partitioned sections) is disposed in the radial gap 136 and bonded to the inner 124 and outer 122 circumferential components by any suitable bonding agent or material 144. The bonding agent 144 may be applied to both the inner 124 and outer 122 circumferential components and at the apex 130 or any combination thereof. Placing the bonding agent 144 at the surface of the insert ensures transfer of the load from the blade root to the pitch bearing. At the insert apex 130, a transition material may be placed to attenuate the stiffness discontinuity between the ring insert 100 to the material making up the blade shells 104.

The width of the radial gap 136 (and insert 100) may vary from the end face 140 of the blade root section 104 to the apex 130. For example, as illustrated, the width of the radial gap 136 may gradually decrease from the end face 140 of the root section 104 to the apex 130. In additional embodiments, the width of the radial gap 136 may be consistent from end face 140 to the apex 130.

In further embodiments, the ring insert 100 may be bonded within the blade root section 104 such that the end face 142 of the ring insert 100 is generally flush with the end face 140 of the root section 104, thereby providing a flush surface 120. Such a configuration provides maximum bonding surface contact area between the ring insert 100 and the blade root section 104, and other wind turbine components. Alternatively, it may not be flush with the blade root end face to preserve a metal-to-metal interface, thereby eliminating a compressive state in the laminate associated with the preload.

Referring now to FIG. 5, a top view of the embodiment shown in FIG. 4 along line A-A is illustrated. The blade root section 104 includes inner 124 and outer 122 circumferential components defining a radial gap 136 therebetween. The ring insert 100 includes inner 126 and outer 128 circumferential surfaces, wherein each surface has a radially varying cross-sectional profile so as to increase bonding surface contact area between the inner 126 and outer 128 circumferential surfaces and the respective circumferential components (124 and 122, respectively) as compared to a constant radius cross-sectional profile. For example, as illustrated, the inner and outer surfaces 126, 128 have a wave-like pattern. Further, bolts 102 are circumferentially spaced (equally or otherwise) around the ring insert 100 and connect the blade root section 104 to a pitch bearing 106 (FIG. 4).

It should be understood that FIGS. 4 and 5 illustrate a ring insert 100 composed of a single segment of material; however, the ring insert 100 may also be composed of multiple segments connected together so as to provide a continuous ring insert. For example, the ring insert 100 may be composed of two segments, one on the pressure side and one on the suction side of the blade root section 104. Further, as illustrated in FIG. 5, the blade root section 104 has a substantially circular cross-section, though any suitable cross-section may be employed.

Additionally, the ring insert 100 may be constructed of any suitable material (with appropriate surface finish) so as to provide sufficient bonding between the ring insert 100 and the blade root section 104. For example, the ring insert 100 may be a fibrous/composite or metallic material or any combination thereof. The fibrous/composite material may be constructed of carbon fibers, glass fibers, natural fibers, or similar, or any combination thereof. Moreover, the ring insert 100 may be constructed of a suitable metal, metal alloy, or any combination thereof. Additionally, the ring insert 100 may be a solid or hollow material.

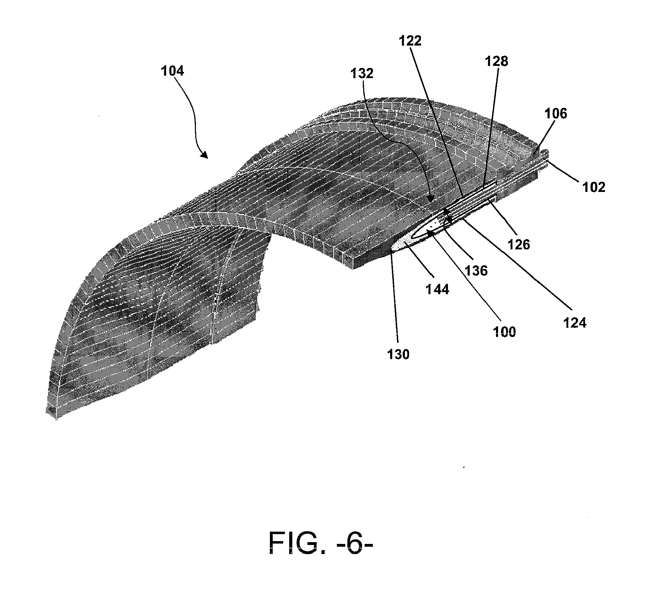

Referring now to FIG. 6, a perspective view of the blade root section 104 of the rotor blade assembly 22 is illustrated. The blade root section 104 has a span-wise end portion 132 defined by inner 124 and outer 122 circumferential components and separated by radial gap 136. The end portion 132 is attached to the pitch bearing 106 by bolt 102. The bolt 102 extends through the pitch bearing 106 and is disposed within the ring insert 100. The ring insert 100 is disposed in the radial gap 136 and bonded to the inner 124 and outer 122 circumferential components by a bonding agent 144. Placing the bonding agent 144 at the surface of the insert ensures transfer of the load from the blade root to the pitch bearing. At the insert apex 130, a transition material may be placed to attenuate the stiffness discontinuity between the ring insert 100 to the material making up the blade shells 104. Any suitable bonding agent may be utilized, including a bonding paste or similar. Further, the ring insert 100 includes inner 126 and outer 128 circumferential surfaces having a radially varying cross-sectional profile so as to increase a bonding surface contact area between the inner 126 and outer 128 circumferential surfaces and the respective circumferential components 124, 122 of the blade root section 104.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiment sof the present invention are defined by the following numbered clauses:
1. A rotor blade assembly for a wind turbine, comprising:
   a pressure side and a suction side, the pressure side and suction side extending between a leading edge and a trailing edge;
   a generally cylindrical blade root section extending span-wise from the pressure side and suction side to an end face of the root section that is configured to attach the rotor blade assembly to a hub;
   the blade root section having a span-wise end portion defined by an inner circumferential component and an outer circumferential component, the inner and outer circumferential components separated by a radial gap; and
   a ring insert disposed in the radial gap and bonded to the inner and outer circumferential components, the ring insert having an inner circumferential surface and an outer circumferential surface, wherein at least one of the inner or outer circumferential surfaces has a radially varying cross-sectional profile that increases bonding surface contact area between the inner or outer circumferential surface and the respective circumferential component of the blade root section as compared to a constant radius cross-sectional profile.
2. The rotor blade assembly of clause 1, wherein the inner and outer circumferential surfaces both have a radially varying cross-sectional profile that increases bonding surface contact area between the inner or outer circumferential surfaces and the respective circumferential components of the blade root section as compared to a constant radius cross-sectional profile.
3. The rotor blade assembly of clause 1 or clause 2, wherein the radially varying cross-sectional profile comprises one of undulating or corrugated squares, rectangles, triangles, waves, or semi-circles.
4. The rotor blade assembly of any preceding clause, wherein the end face of the root section is generally flush with an end face of the ring insert.
5. The rotor blade assembly of any preceding clause, wherein the inner and outer circumferential components merge together at an apex, and wherein the ring insert is further bonded at the apex.
6. The rotor blade assembly of any preceding clause, wherein the end face of the root section is connectable to a pitch bearing.
7. The rotor blade assembly of any preceding clause, wherein the pitch bearing is configured operably between the rotor blade assembly and a rotatable hub.
8. The rotor blade assembly of any preceding clause, wherein a connecting means extends through the pitch bearing and into the rotor blade assembly.
9. The rotor blade assembly of any preceding clause, wherein the connecting means are disposed within the ring insert.
10. The rotor blade assembly of any preceding clause, wherein the connecting means are circumferentially spaced bolts.
11. The rotor blade assembly of any preceding clause, wherein the ring insert is portioned into a plurality of sections.
12. A wind turbine, comprising:
   a tower;
   a nacelle configured atop the tower; and
   a rotor coupled to the nacelle, the rotor comprising a rotatable hub and at least one rotor blade assembly, the rotor blade assembly, comprising:
      a pressure side and a suction side, the pressure side and suction side extending between a leading edge and a trailing edge;
      a generally cylindrical blade root section extending span-wise from the pressure side and suction side to an end face of the root section that is configured to attach the rotor blade assembly to a hub;
      the blade root section having a span-wise end portion defined by an inner circumferential component and an outer circumferential component, the inner and outer circumferential components separated by a radial gap; and
      a ring insert disposed in the radial gap and bonded to the inner and outer circumferential components, the ring insert having an inner circumferential surface and an outer circumferential surface, wherein at least one of the inner or outer circumferential surfaces has a radially varying cross-sectional profile that increases bonding surface contact area between the inner or outer circumferential surface and the respective circumferential component of the blade root section as compared to a constant radius cross-sectional profile.
13. The wind turbine of any preceding clause, wherein the inner and outer circumferential surfaces both have a radially varying cross-sectional profile that increases bonding surface contact area between the inner or outer circumferential surfaces and the respective circumferential components of the blade root section as compared to a constant radius cross-sectional profile.
14. The wind turbine of any preceding clause, wherein the radially varying cross-sectional profile comprise one of undulating or corrugated squares, rectangles, triangles, waves, or semi-circles.
15. The wind turbine of any preceding clause, wherein the end face of the root section is generally flush with an end face of the ring insert.
16. The wind turbine of any preceding clause, wherein the inner and outer circumferential components merge together at an apex, and wherein the ring insert is further bonded at the apex.
17. The wind turbine of any preceding clause, wherein the end face of the root section is connected to a pitch bearing.
18. The wind turbine of any preceding clause, wherein the pitch bearing is configured operably between the rotor blade assembly and a rotatable hub.
19. The wind turbine of any preceding clause wherein a connecting means extends through the pitch bearing and engages within the ring insert of the rotor blade assembly.

## Claims

1. A rotor blade assembly (22) for a wind turbine (10), comprising:
a pressure side (110) and a suction side (112), the pressure side and suction side extending between a leading edge (114) and a trailing edge (116);
a generally cylindrical blade root section (104) extending span-wise from the pressure side (110) and suction side (112) to an end face (142) of the root section (104) that is configured to attach the rotor blade (22) assembly to a hub;
the blade root (104) section having a span-wise end portion defined by an inner circumferential component (122) and an outer circumferential component (124), the inner and outer circumferential components separated by a radial gap (136); and
a ring insert (100) disposed in the radial gap (136) and bonded to the inner and outer circumferential components (122,124), the ring insert (100) having an inner circumferential surface (126) and an outer circumferential surface (128), wherein at least one of the inner or outer circumferential surfaces (126,128) has a radially varying cross-sectional profile that increases bonding surface contact area between the inner or outer circumferential surface (126,128) and the respective circumferential component (122,124) of the blade root section as compared to a constant radius cross-sectional profile.

2. The rotor blade assembly (22) of claim 1, wherein the inner and outer circumferential surfaces (126,128) both have a radially varying cross-sectional profile that increases bonding surface contact area between the inner or outer circumferential surfaces and the respective circumferential components of the blade root section as compared to a constant radius cross-sectional profile.

3. The rotor blade assembly (22) of any preceding claim, wherein the radially varying cross-sectional profile comprises one of undulating or corrugated squares, rectangles, triangles, waves, or semi-circles.

4. The rotor blade assembly (22) of any preceding claim, wherein the end face of the root section (104) is generally flush with an end face of the ring insert.

5. The rotor blade assembly (22) of any preceding claim, wherein the inner and outer circumferential components (122,124) merge together at an apex, and wherein the ring insert (100) is further bonded at the apex.

6. The rotor blade assembly (22) of any preceding claim, wherein the end face of the root section (104) is connectable to a pitch bearing.

7. The rotor blade assembly (22) of claim 6, wherein the pitch bearing is configured operably between the rotor blade assembly and a rotatable hub.

8. The rotor blade assembly (22) of claim 6 or claim 7, wherein a connecting means extends through the pitch bearing and into the rotor blade assembly.

9. The rotor blade assembly (22) of claim 8, wherein the connecting means are disposed within the ring insert.

10. The rotor blade assembly (22) of claim 8 or claim 9, wherein the connecting means are circumferentially spaced bolts.

11. The rotor blade assembly (22) of any preceding claim, wherein the ring insert (100) is portioned into a plurality of sections.

12. A wind turbine (10), comprising:
a tower (12);
a nacelle (16) configured atop the tower; and
a rotor (18) coupled to the nacelle, the rotor comprising a rotatable hub
and at least one rotor blade assembly (22), the rotor blade assembly, comprising:
a pressure side and a suction side, the pressure side and suction side extending between a leading edge and a trailing edge;
a generally cylindrical blade root section (104) extending span-wise from the pressure side and suction side to an end face of the root section that is configured to attach the rotor blade assembly to a hub;
the blade root section (104) having a span-wise end portion defined by an inner circumferential component and an outer circumferential component, the inner and outer circumferential components separated by a radial gap; and
a ring insert (100) disposed in the radial gap and bonded to the inner and outer circumferential components, the ring insert having an inner circumferential surface and an outer circumferential surface, wherein at least one of the inner or outer circumferential surfaces has a radially varying cross-sectional profile that increases bonding surface contact area between the inner or outer circumferential surface and the respective circumferential component of the blade root section as compared to a constant radius cross-sectional profile.

13. The wind turbine (10) of claim 12, wherein the inner and outer circumferential surfaces (126,128) both have a radially varying cross-sectional profile that increases bonding surface contact area between the inner or outer circumferential surfaces and the respective circumferential components of the blade root section as compared to a constant radius cross-sectional profile.

14. The wind turbine (10) of claim 12 or claim 13, wherein the radially varying cross-sectional profile comprise one of undulating or corrugated squares, rectangles, triangles, waves, or semi-circles.

15. The wind turbine (10) of any of claims 12 to 14, wherein the end face of the root section (104) is generally flush with an end face of the ring insert (100).
